# EUROPEAN PATENT APPLICATION

(11) **EP 1 475 207 A2**
(43) Date of publication of application: **10.11.2004**
(21) Application number: 03292124.9
(22) Date of filing: 28.08.2003
(51) Int. Cl.: B29C 43/22, B29C 43/28

(54) **Method and device for producing an embossed pattern on a film**

(30) Priority: 09.05.2003 KR 2003029333
(71) Applicant: Lee, Ji-Hee, Fullerton, CA 92835 (US)
(72) Inventor: Lee, Ji Hee, Fullerton, CA 92835 (US); Cho, Jung Sun, Tongiin MyunGimpo City Gyunggi Do (KR)
(74) Representative: Texier, Christian

(57) **Abstract**

A film manufacturing method and a device thereof by a resin print configured to allow resin to be temporarily saved at one side of a raw film material for integrally printing by compression force of a roller, wherein the device comprises: a supply roller (110) wound with a raw film material (F); a printing roller (210) adhesively fed thereon with the raw film material supplied from the supply roller and formed thereon with a plurality of grooves (210a); a supply hopper (310) for supplying a predetermined melted resin toward the surface of the printed roller; and first and second pressing rollers (410,420) abutted on both sides of the printed roller for pressing the raw film material to the surface of the printed roller, such that a preferable pattern can be printed on the raw film material, resulting in increase of productivity by simplified process and reduction of raw materials.

## Description

### FIELD OF THE INVENTION

The present invention relates to a film manufacturing method and a device thereof by a resin print and, more particularly, to a film manufacturing method and a device thereof adapted to form an embossment on the surface of a film for packaging material via a resin printing method.

### BACKGROUND OF THE INVENTION

In general, film sheets are used as raw sheets for food packaging material, and two or more of the raw sheets are combined in order to obtain a preset thickness for different usages.

Food packaging material is made by combining raw material sheets together, wherein one surface has an embossed pattern for preventing food from sticking to the food packaging material and for maintaining an inner air-flow passage.

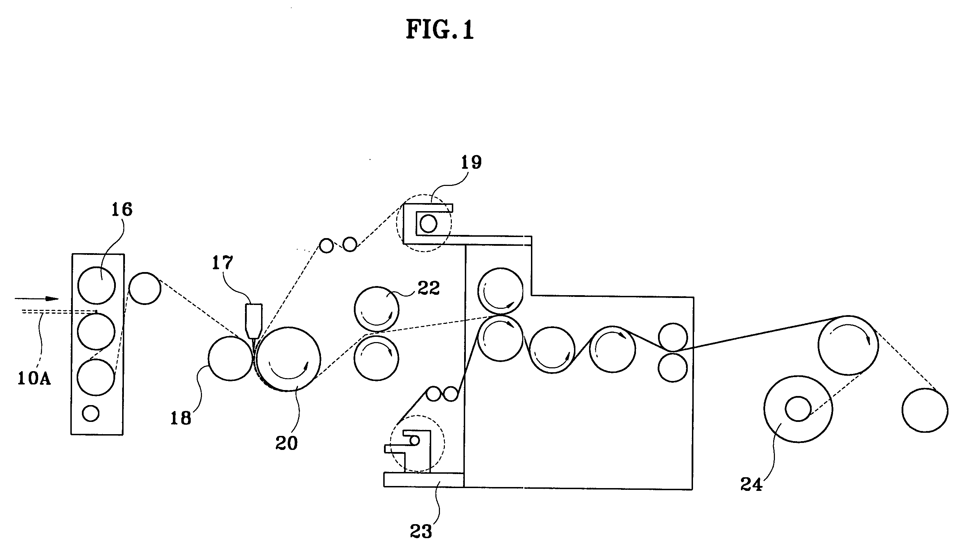

FIG. 1 illustrates a conventional coating process of a film sheet pursuant to Korean Laid-open Patent application No. 2000-13194 entitled, " Coating device and a method for a foam resin sheet and a foam resin coating structure," wherein the device comprises: a foam sheet supply roller 16 for supplying a hardened foam sheet 10A; an adhesive resin extruder 17 for coating the adhesive resin on the surface of the foam sheet 10A supplied from the foam sheet supply roller 16; a Polypropylene (PP) film supply roller 19 for supplying a PP film onto an upper part of the adhesive resin coated by the adhesive resin extruder 17; a sizing drum 20 for lowering the temperature for hardening and feeding the PP film while the PP film is attached to the foam sheet 10A by the adhesive resin; a heating roller 22 for reheating the foam sheet 10A having passed the sizing drum 20; a laminate unit 23 for re-supplying the PP film to a back surface of the foam sheet 10A having passed the heating roller 22 to thereby coat the back surface of the foam sheet 10A; and a foam sheet winder unit 24 for winding the foam sheet 10A.

However, there is a drawback in the conventional adhesive method of a film sheet in that film sheets formed with an embossed pattern result in consumption of a large quantity of raw film materials.

In order to overcome the drawback of the aforesaid method, an embossed pattern is formed on the surface of a supply roller and is pressed onto a film sheet to form a pattern. However, there is still a drawback in that damage occurs to an area where the embossed pattern is pressed.

There is still another drawback in the conventional method for forming a pattern on the surface of the film sheet in that the process is complicated and productivity is reduced in addition to the material waste and the damage thus described.

### SUMMARY OF THE INVENTION

The present invention is disclosed to provide a film manufacturing method and a device thereof for minimizing waste of film raw materials and greatly improving productivity.

In accordance with one object of the present invention, there is provided a film manufacturing method by a resin print, the method comprising the steps of: supplying a raw film material to a printed roller formed thereon with a plurality of grooves; injecting resin into the grooves formed on a surface of the printed roller; adhering the raw film material onto the surface of the printed roller to allow the resin in the grooves to be printed on the surface of the raw film material; and winding up the raw film material with the resin printed thereon in embossed patterns.

The step of injecting resin further comprises a step of scraping the surface of the printed roller after injecting the resin.

The step of injecting resin further comprises a step of adding an antibacterial agent before injecting the resin.

In accordance with another object of the present invention, there is provided a film manufacturing device by a resin print, the device comprising: a supply roller wound with a raw film material; a printed roller adhesively fed thereon with raw film material supplied from the supply roller and formed thereon with a plurality of grooves; a supply hopper for supplying a predetermined melted resin toward the surface of the printed roller; and first and second pressing rollers abutted on both sides of the printed roller for pressing the raw film material to the surface of the printed roller.

The device further comprises a scraper for guiding the resin to the grooves by scraping the resin coated on the printed roller.

### BRIEF DESCRIPTION OF THE DRAWINGS

For fuller understanding of the nature and objects of the present invention, reference should be made to the following detailed description taken in conjunction with the accompanying drawings in which:
FIG. 1 is a schematic drawing for illustrating a conventional resin film manufacturing device.
FIG. 2 is a schematic drawing for illustrating a film manufacturing method and a device thereof by a resin print according to a first embodiment of the present invention.
FIG. 3 is a perspective view for showing a principal part according to the first embodiment of the present invention.
FIG. 4 is a cross-sectional view for showing a film manufactured according to the first embodiment of the present invention.
FIG. 4a illustrates a film manufactured according to the first embodiment of the present invention.
FIG. 4b illustrates a film manufactured according to a second embodiment of the present invention.

### DETAILED DESCRIPTION OF THE INVENTION

Hereinafter, the preferred embodiment of the present film manufacturing method by a resin print and a device thereof will be described in detail with reference to the accompanying drawings.

In a film manufacturing method by a resin print according to a first embodiment of the present invention, a raw film material wound by a supply roller is fed to a printed roller. Resin is inserted into the grooves formed on the surface of the printed roller. The inserted resin is then printed on the raw film material.

In other words, the surface of the printed roller is scraped for preventing the external portions of the grooves of the raw film material from being adhered to the resin after inserting the resin into the intaglio pattern.

The reason the resin is printed on one side of the raw film material is that it is preferable that the temperature of the printed roller is appropriately maintained to prevent the resin from being over-cooled or the raw film material from being damaged while the raw film material is pressed onto a surface side of the printed roller.

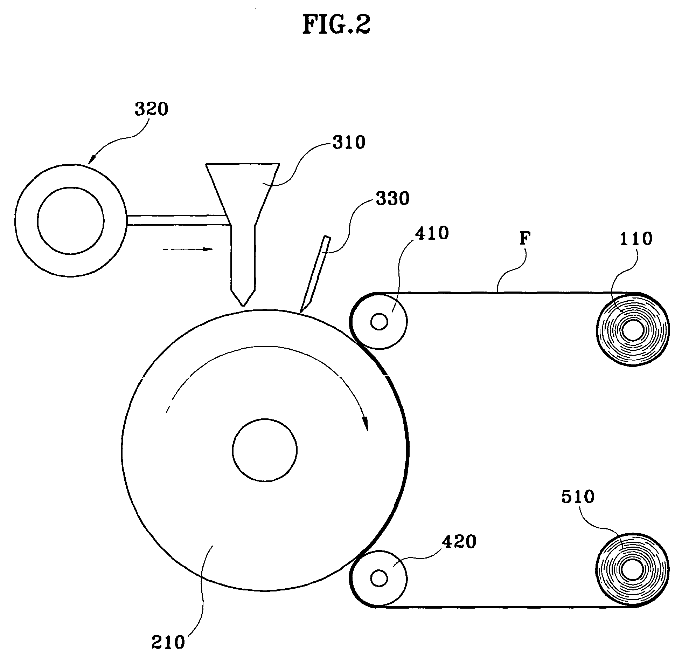

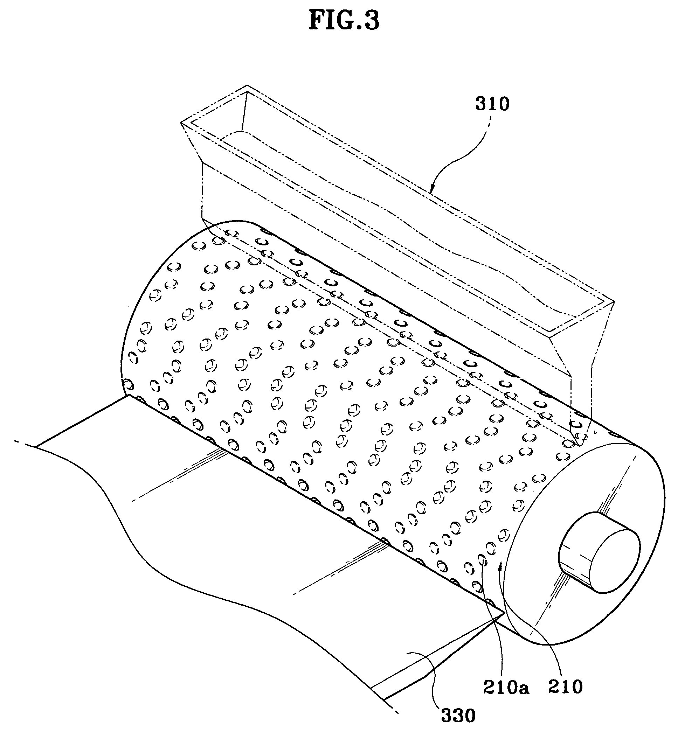

On the other hand as shown in FIGs. 2 to 4, a film manufacturing device by a resin print includes a supply roller 110 wound with a raw film material (F), a rotating printed roller 210 formed with a plurality of grooves 210a on a surface thereof and abutted on the surface thereof by the raw film material (F) transferred from the supply roller 110 in order to have an intaglio pattern thereon, a supply hopper 310 installed at a predetermined distance from the periphery of the printed roller 210 for supplying resin (F1) into the grooves 210a, a scraper 330 mounted to contact the periphery of the printed roller 210 for preventing the resin (F1) provided by the supply hopper 310 from streaming down toward the external side of the grooves 210a, and first and second pressing rollers 410 and 420 respectively abutted on both sides of the periphery of the printed roller 210.

The device further includes a winding roller 510 wound with the raw film material (F) printed with the resin (F1) received from the printed roller 210 for feeding and transportation.

To put it in more detail, the printed roller 210 is further provided with a heating means (not shown) for preventing the resin (F1) supplied from the supply hopper 310 from hardening and for heating the resin (F1) up to a predetermined temperature hot enough to be integrally printed on a surface of the raw film material (F) while the grooves 210a are arranged either in regular or irregular patterns at a periphery of the printed roller 210.

It is preferable that the heating means is, for .example, a fluid of an appropriate temperature supplied in the printed roller 210.

The supply hopper 310 is formed at one side thereof with an extruder 320 for supplying the resin (F1) to the printed roller 210 at an appropriate pressure. The extruder 320 is mounted with an extra heating means (for example, a heater or a hot wire) for maintaining the temperature at approximately 180-200°C, thereby enabling to melt and supply the resin (F1).

Further, a scraper 330 abuts thereunder onto a periphery of the printed roller 210 for scraping the periphery of the printed roller 210.

Hereinafter, the operation of the present invention thus constructed will be described.

In the film manufacturing device by the resin (F1) print, when the raw film material (F) is provided from the supply roller 110 to the printed roller 210, the resin (F1) from the supply hopper 310 is supplied into the grooves 210a of the printed roller 210 by the pressure of the extruder 320. Successively, the raw film material (F) is pressed onto a part of the peripheral surface of the printed roller 210 by the first and second pressing rollers 410 and 420 to allow the resin (F1) in the grooves 210a to be printed on a lateral surface of the raw film material (F).

At this time, the raw film material (F) is guided by contact between the first and second pressing rollers 410 and 420 and the printed roller 210, such that the resin F1 is integrally attached to and printed on the surface of the raw film material (F) by compressed force to be transferred and wound on the winding roller 510.

The embossing shaped resin (F1) is integrally formed at one surface of the raw film material (F), such that when the raw film material (F) is processed to be used as a food packaging material or the like, the vacuum degassing process is simplified by forming an air layer path.

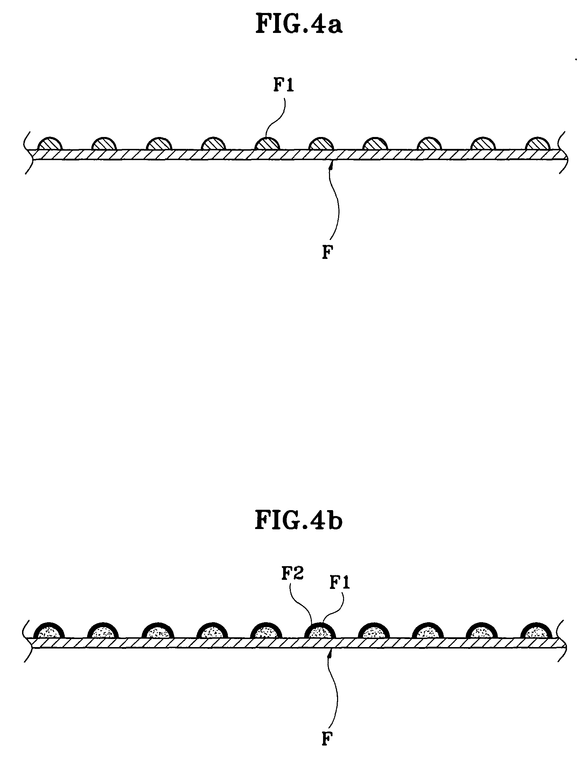

Furthermore, FIG. 4b illustrates a second embodiment of the present invention, a structure that is identical to that of the first embodiment except that a functional substance such as an antibacterial agent (F2) or the like is added to the supply hopper 310 before the resin (F1) is integrally printed onto the raw film material (F).

The antibacterial agent (F2) made of an antibacterial substance such as a silver or chitosan and the like is adequately added to the resin (F1) within the supply hopper 310.

There is an advantage in the second embodiment of the present invention in that when the raw film material (F) utilized for a food packaging material is added with the embossing shaped resin (F1), the surface area contacting on the inner air of the packing film is widened to increase the usage efficiency.

As apparent from the foregoing, there is an advantage in the embodiments of the present invention in that the resin is temporarily saved at one surface of a raw film material to be printed by compression force of the roller, thereby enabling to print a preferable embossed form on the raw film material.

There is another advantage in that the productivity can be greatly improved by a simplified process.

There is still another advantage in that the raw film material manufactured by a resin print method is thinly manufactured in overall thickness in comparison with the conventional raw sheets, contributing to a high transparency for an elegant appearance.

## Claims

1. A film manufacturing method by a resin print, the method comprising the steps of:
supplying a raw film material to a printed roller formed thereon with a plurality of grooves;
injecting resin into said grooves formed on a surface of said printed roller;
adhering said raw film material onto the surface of said printed roller to allow said resin in said grooves to be printed on the surface of said raw film material; and
winding up said raw film material with said resin printed thereon in embossed patterns.

2. The method as defined in claim 1, wherein the step of injecting resin further comprises a step of scraping the surface of said printed roller after injecting said resin.

3. The method as defined in claim 1, wherein the step of injecting resin further comprises a step of adding an antibacterial agent before injecting said resin.

4. A film manufacturing device by a resin print, the device comprising:
a supply roller wound with a raw film material;
a printed roller adhesively fed thereon with raw film material supplied from said supply roller and formed thereon with a plurality of grooves;
a supply hopper for supplying a predetermined melted resin toward the surface of said printed roller; and
first and second pressing rollers abutted on both sides of said printed roller for pressing said raw film material to the surface of said printed roller.

5. The device as defined in claim 4, the device further comprising a scraper for guiding said resin to said grooves by scraping said resin coated on said printed roller.
